# EUROPEAN PATENT SPECIFICATION

(11) **EP 4 242 667 B1**
(45) Date of publication and mention of the grant of the patent: **12.03.2025**
(21) Application number: 22190796.7
(22) Date of filing: 17.08.2022
(51) Int. Cl.: G01P 15/125, G01P 15/097, G01P 15/08, G01C 19/5719, G01C 19/5712

(54) **SENSOR AND ELECTRONIC DEVICE**
SENSOR UND ELEKTRONISCHE VORRICHTUNG
CAPTEUR ET DISPOSITIF ÉLECTRONIQUE

(30) Priority: 09.03.2022 JP 2022035890
(43) Date of publication of application: 13.09.2023
(73) Proprietor: Kabushiki Kaisha Toshiba, Minato-ku Tokyo (JP)
(72) Inventor: MASUNISHI, Kei, Tokyo (JP); TOMIZAWA, Yasushi, Tokyo (JP); OGAWA, Etsuji, Tokyo (JP); GANDO, Ryunosuke, Tokyo (JP); KAJI, Shiori, Tokyo (JP); HIRAGA, Hiroki, Tokyo (JP); MIYAZAKI, Fumito, Tokyo (JP); ONO, Daiki, Tokyo (JP); UCHIDA, Kengo, Tokyo (JP)
(74) Representative: Marks & Clerk LLP

(56) References cited:
- US-A1- 2011 067 495
- US-A1- 2021 396 780

## Description

### FIELD

Embodiments of the invention generally relate to a sensor and an electronic device.

### BACKGROUND

For example, there is a sensor using a MEMS structure.

US 2021396781 A1 discloses a known MEMS sensor used as an accelerometer or as a gyroscope. In particular, it discloses a differential resonant accelerometer (DRA).

US 2011 067495 A1 discloses another known micromachined accelerometer whereby the displacement of the proof mass plate is detected by means of differential capacitive sensing.

It is desired to improve the characteristics of the sensor.

### BRIEF DESCRIPTION OF THE DRAWINGS

FIG. 1 is a schematic view illustrating a sensor according to a first embodiment;
FIGS. 2A and 2B are schematic views illustrating the sensor according to the first embodiment;
FIGS. 3A to 3C are schematic views illustrating the sensor according to the first embodiment;
FIG. 4 is a schematic plan view illustrating the sensor according to the first embodiment;
FIG. 5 is a schematic cross-sectional view illustrating the sensor according to a second embodiment;
FIG. 6 is a schematic diagram illustrating an electronic device according to a third embodiment;
FIGS. 7A to 7H are schematic views illustrating the application of the electronic device; and
FIGS. 8A and 8B are schematic views illustrating the sensor according to a fourth embodiment.

### DETAILED DESCRIPTION

According to one embodiment, a sensor includes a first detection element, and a controller. The first detection element includes a base body, a first support portion, a first movable member, a first detection electrode, and a first counter detection electrode. The first support portion is fixed to the base body. The first movable member is supported by the first support portion. A first gap is provided between the base body and the first movable member. The first detection electrode is fixed to the base body. The first counter detection electrode is fixed to the base body. The first movable member includes a first movable portion. The first movable portion includes a first beam, a first conductive extending portion, and a first connecting portion. The first beam includes a first beam end portion, a first beam other end portion, and a first beam intermediate portion provided between the first beam end portion and the first beam other end portion. A second direction from the first beam end portion to the first beam other end portion crosses a first direction from the base body to the first support portion. The first conductive extending portion includes a first extending portion, a first extending other portion, and a first extending intermediate provided between the first extending portion and the first extending other portion. A direction from the first extending portion to the first extending other portion is along the second direction. The first connecting portion connects the first extending intermediate portion with the first beam intermediate portion. The first extending portion is between the first detection electrode and the first counter detection electrode in a third direction. The third direction crosses a plane including the first direction and the second direction. The controller includes a first differential circuit. The first differential circuit is configured to output a signal according to a difference between a capacitance between the first detection electrode and the first extending portion, and a capacitance between the first counter detection electrode and the first extending portion.

According to one embodiment, an electronic device includes the sensor described above, and a circuit processing portion configured to control a circuit based on a signal obtained from the sensor.

Various embodiments are described below with reference to the accompanying drawings.

The drawings are schematic and conceptual; and the relationships between the thickness and width of portions, the proportions of sizes among portions, etc., are not necessarily the same as the actual values. The dimensions and proportions may be illustrated differently among drawings, even for identical portions.

In the specification and drawings, components similar to those described previously in an antecedent drawing are marked with like reference numerals, and a detailed description is omitted as appropriate.

### First embodiment

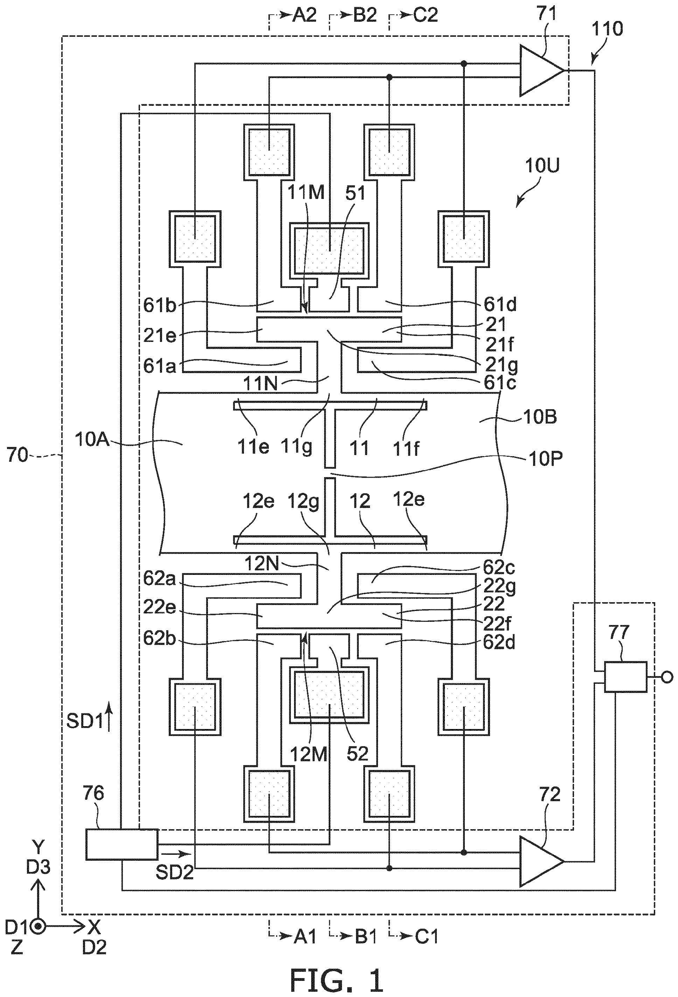

FIGS. 1, 2A, 2B, and 3A to 3C are schematic views illustrating a sensor according to a first embodiment.

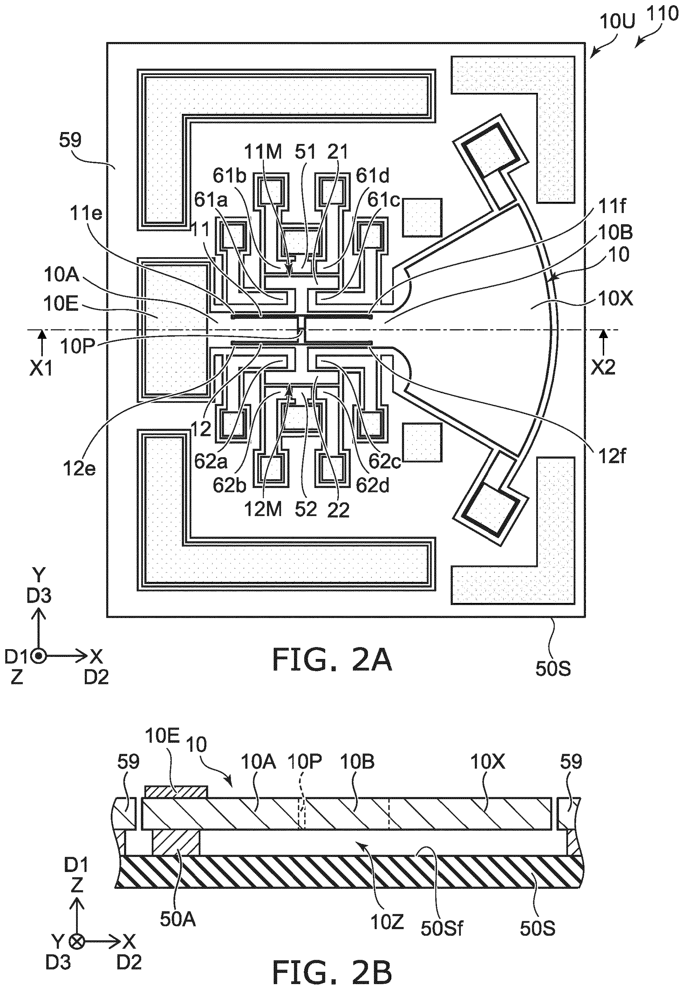

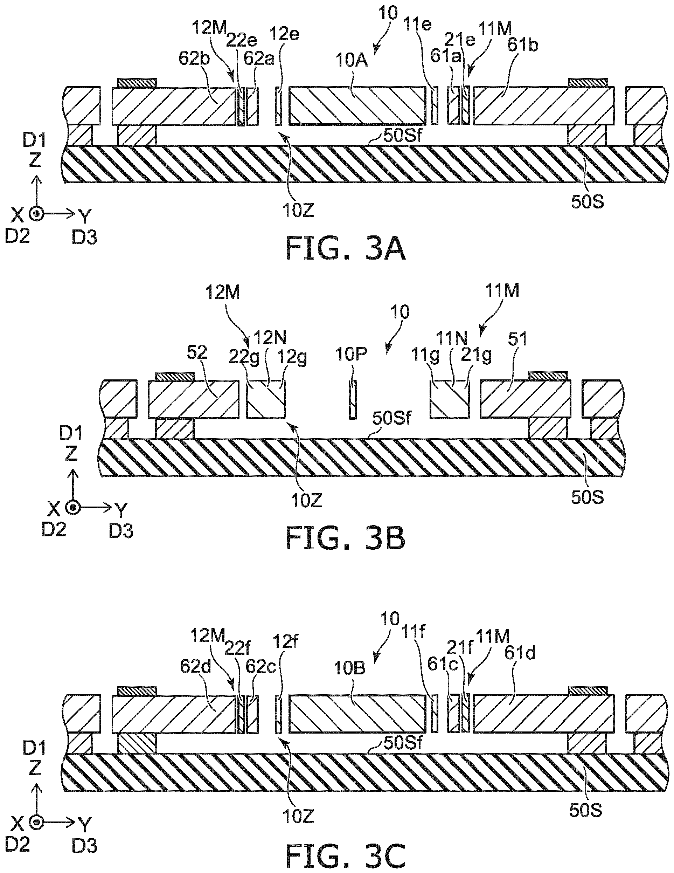

FIG. 2A is a plan view. FIG. 2B is a sectional view taken along the line X1-X2 of FIG. 2A. FIG. 1 is an enlarged plan view illustrating a part of FIG. 2A. FIG. 3A is a cross-sectional view taken along the line A1-A2 of FIG. 1. FIG. 3B is a sectional view taken along the line B1-B2 of FIG. 1. FIG. 3C is a cross-sectional view taken along the line C1-C2 of FIG. 1

As shown in FIG. 1, a sensor 110 according to the embodiment includes a first detection element 10U and a controller 70.

As shown in FIGS. 2A and 2B, the first detection element 10U includes a base body 50S, a first support portion 50A, a first movable member 10, a first detection electrode 61a, and a first counter detection electrode 61b. The first support portion 50A is fixed to the base body 50S. The first movable member 10 is supported by the first support portion 50A. A first gap 10Z is provided between the base body 50S and the first movable member 10.

The first detection electrode 61a is fixed to the base body 50S. The first counter detection electrode 61b is fixed to the base body 50S (see FIG. 3A).

A first direction D1 from the base body 50S to the first support portion 50A is a Z-axis direction. One direction perpendicular to the Z-axis direction is defined as an X-axis direction. The direction perpendicular to the Z-axis direction and the X-axis direction is defined as a Y-axis direction.

As shown in FIG. 2B, the base body 50S includes a first surface 50Sf. The first surface 50Sf is along the X-Y plane. The first movable member 10 extends along the first surface 50Sf. As shown in FIG. 2A, the first movable member 10 includes a first movable portion 11M.

As shown in FIG. 1, the first movable portion 11M includes a first beam 11, a first conductive extending portion 21, and a first connecting portion 11N.

The first beam 11 includes a first beam end portion 11e, a first beam other end portion 11f, and a first beam intermediate portion 11g. The first beam intermediate portion 11g is provided between the first beam end portion 11e and the first beam other end portion 11f. A second direction D2 from the first beam end portion 11e to the first beam other end portion 11f crosses the first direction D1. The second direction D2 is, for example, the X-axis direction.

The first conductive extending portion 21 includes a first extending portion 21e, a first extending other portion 21f, and a first extending intermediate portion 21g. The first extending intermediate portion 21g is provided between the first extending portion 21e and the first extending other portion 21f. The direction from the first extending portion 21e to the first extending other portion 21f is along the second direction D2.

The first connecting portion 11N connects the first extending intermediate portion 21g with the first beam intermediate portion 11g. The first connecting portion 11N extends along the Y-axis direction. A length (width) of the first connecting portion 11N along the X-axis direction is shorter than a length of the first beam 11 along the X-axis direction. The length (width) of the first connecting portion 11N along the X-axis direction is shorter than the length of the first conductive extending portion 21 along the X-axis direction.

As shown in FIG. 1, the first extending portion 21e is located between the first detection electrode 61a and the first counter detection electrode 61b in a third direction D3. The third direction D3 crosses a plane including the first direction D1 and the second direction D2. The third direction D3 is, for example, the Y-axis direction.

As shown in FIG. 1, the controller 70 includes a first differential circuit 71. The first differential circuit 71 is configured to output a signal according to a difference between a capacitance between the first detection electrode 61a and the first extending portion 21e, and a capacitance between the first counter detection electrode 61b and the first extending portion 21e.

For example, the first beam 11 is configured to vibrate. In response to the vibration of the first beam 11, the first conductive extending portion 21 is displaced along the third direction D3. In accordance with the displacement, a first distance between the first extending portion 21e and the first detection electrode 61a changes. In accordance with the displacement, a second distance between the first extending portion 21e and the first counter detection electrode 61b changes. The second distance decreases when the first distance increases. The second distance increases when the first distance decreases.

Due to the change in the first distance, the first capacitance between the first extending portion 21e and the first detection electrode 61a changes. A first electric signal corresponding to a change in the first capacitance is obtained from the first detection electrode 61a. Due to the change in the second distance, the second capacitance between the first extending portion 21e and the first counter detection electrode 61b changes. A second electric signal corresponding to a change in the second capacitance is obtained from the first counter detection electrode 61b. The second capacitance decreases when the first capacitance increases. The second capacitance increases when the first capacitance decreases.

The first differential circuit 71 is configured to output a signal corresponding to the difference between the first electric signal and the second electric signal. With this signal, the vibration state of the first beam 11 can be detected with high efficiency. For example, same phase noise is removed. For example, high sensitivity can be obtained. For example, good linearity is obtained. According to the embodiment, it is possible to provide a sensor whose characteristics can be improved.

As shown in FIG. 1, the first detection element 10U may include a first drive electrode 51. The first drive electrode 51 is fixed to the base body 50S (see FIG. 3B). As shown in FIG. 1, the first drive electrode 51 faces the first extending intermediate portion 21g. For example, in the third direction D3, the first extending intermediate portion 21g is between the first beam 11 and the first drive electrode 51.

As shown in FIG. 1, the controller 70 may include a first drive circuit 76. The first drive circuit 76 is configured to supply a first drive signal SD1 to the first drive electrode 51. For example, one terminal of the first drive circuit 76 is electrically connected to an electrode 10E (see FIG. 2B) provided on the first support portion 50A. The electrode 10E is electrically connected to the first movable member 10. Another terminal of the first drive circuit 76 is electrically connected to the second drive electrode 52. The first beam 11 is configured to vibrate in response to the first drive signal SD1.

For example, the first drive signal SD1 includes an AC component. The first conductive extending portion 21 is capacitively coupled to the first drive electrode 51. Due to the capacitive coupling, the first conductive extending portion 21 vibrates in response to the first drive signal SD1. For example, the first beam 11 resonates. For example, when an external force is applied to the first movable member 10, stress is applied to the first beam 11. The resonance frequency of the first beam 11 changes according to the stress. By processing the signal corresponding to the change in the resonance frequency, the applied external force can be detected.

In the embodiment, the displacement of the first extending portion 21e in response to the vibration of the first beam 11 is differentially detected by the first detection electrode 61a and the first counter detection electrode 61b. As a result, the vibration state of the first beam 11 can be detected with higher accuracy. For example, noise is suppressed. High sensitivity, and good linearity can be obtained. This makes it possible to more appropriately obtain the change in the resonance frequency. For example, the applied external force can be detected more appropriately.

As shown in FIG. 1, the first detection element 10U may include a first other detection electrode 61c and a first other counter detection electrode 61d. The first other detection electrode 61c is fixed to the base body 50S. The first other counter detection electrode 61d is fixed to the base body 50S (see FIG. 3C).

As shown in FIG. 1, the first extending other portion 21f is located between the first other detection electrode 61c and the first other counter detection electrode 61d in the third direction D3.

The first differential circuit 71 is configured to output a signal according to a difference between a capacitance between the first other detection electrode 61c and the first extending other portion 21f, and a capacitance between the first other counter detection electrode 61d and the first extending other portion 21f. For example, noise based on the first drive signal SD1 may occur in the detection signal due to the influence of parasitic capacitance caused by wiring or the like. Noise may deteriorate the detection characteristics of changes in the resonance frequency. In the embodiments, for example, noise is more suppressed. Higher sensitivity and better linearity of detection is obtained.

As shown in FIG. 1, the first other detection electrode 61c may be electrically connected to the first detection electrode 61a. The first other counter detection electrode 61d may be electrically connected to the first counter detection electrode 61b.

A position of the first other detection electrode 61c in the third direction D3 is between a position of the first beam other end portion 11f in the third direction D3 and a position of the first other counter detection electrode 61d in the third direction D3.

A position of the first detection electrode 61a in the third direction D3 is between a position of the first beam end portion 11e in the third direction D3 and a position of the first counter detection electrode 61b in the third direction D3.

As shown in FIG. 2A, the first movable member 10 may include a first movable base portion 10A, a connection base portion 10P, and a second movable base portion 10B. As shown in FIG. 2B, the first movable base portion 10A is supported by the first support portion 50A. The connection base portion 10P is supported by the first movable base portion 10A. The second movable base portion 10B is supported by the connection base portion 10P. A direction from the first movable base portion 10A to the second movable base portion 10B is along the second direction D2.

The first beam end portion 11e is connected to the first movable base portion 10A. The first beam other end portion 11f is connected to the second movable base portion 10B. The first beam 11 is, for example, a double-supported beam.

A width of the connection base portion 10P along the third direction D3 is shorter than a width of the first movable base portion 10A along the third direction D3. The width of the connection base portion 10P along the third direction D3 is shorter than a width of the second movable base portion 10B along the third direction D3. For example, when an external force is applied, the second movable base portion 10B can be displaced along the rotation direction about the connection base portion 10P. Due to this displacement, compressive stress or tensile stress is applied to the first beam 11. The resonance frequency of the first beam 11 changes according to the stress. External force can be detected by detecting the change in resonance frequency.

As shown in FIGS. 2A and 2B, the first movable member 10 may include a movable weight portion 10X. The movable weight portion 10X is supported by the second movable base portion 10B. In the second direction D2, the second movable base portion 10B is located between the first movable base portion 10A and the movable weight portion 10X.

When an external force is applied, the movable weight portion 10X is displaced along the rotation direction centered on the connection base portion 10P. Large displacement is easily obtained. As a result, the stress applied to the first beam 11 increases. Higher sensitivity is obtained.

As shown in FIG. 1, the first movable member 10 may include a second movable portion 12M. The second movable portion 12M includes a second beam 12, a second conductive extending portion 22, and a second connecting portion 12N.

The second beam 12 includes a second beam end portion 12e, a second beam other end portion 12f, and a second beam intermediate portion 12g. The second beam intermediate portion 12g is provided between the second beam end portion 12e and the second beam other end portion 12f. A direction from the second beam end portion 12e to the second beam other end portion 12f is along the second direction D2.

The second conductive extending portion 22 includes a second extending portion 22e, a second extending other portion 22f, and a second extending intermediate portion 22g. The second extending intermediate portion 22g is provided between the second extending portion 22e and the second extending other portion 22f. A direction from the second extending portion 22e to the second extending other portion 22f is along the second direction D2.

The second connecting portion 12N connects the second extending intermediate portion 22g to the second beam intermediate portion 12g. The second connecting portion 12N extends along the third direction D3.

The second extending portion 22e is located between the second detection electrode 62a and the second counter detection electrode 62b in the third direction D3.

The second beam end portion 12e is connected to the first movable base portion 10A. The second beam other end portion 12f is connected to the second movable base portion10B. The connection base portion 10P is located between the second beam 12 and the first beam 11 in the third direction D3.

The controller 70 includes a second differential circuit 72. The second differential circuit 72 is configured to output a signal according to a difference between a capacitance between the second detection electrode 62a and the second extending portion 22e, and a capacitance between the second counter detection electrode 62b and the second extending portion 22e. For example, noise is more suppressed. Higher sensitivity, and better linearity of detection is obtained.

As shown in FIG. 1, the first detection element 10U may include a second drive electrode 52. As shown in FIG. 3B, the second drive electrode 52 is fixed to the base body 50S. The second drive electrode 52 faces the second extending intermediate portion 22g. The second extending intermediate portion 22g is between the second drive electrode 52 and the second beam 12 in the third direction D3.

The first drive circuit 76 can supply a second drive signal SD2 to the second drive electrode 52. The second beam 12 can vibrate in response to the second drive signal SD2.

For example, when an external force is applied and the movable weight portion 10X is displaced, one of compressive stress and tensile stress is applied to the first beam 11. At this time, the other of the compressive stress and the tensile stress is applied to the second beam 12. In the resonance frequency of the first beam 11, one change of increase and decrease occurs. In the resonant frequency of the second beam 12, the other change of increase and decrease occurs. The signal corresponding to the vibration of these beams is obtained by the detection electrode. By differentially processing the signal obtained from the first movable portion 11M and the signal obtained from the second movable portion 12M, the change in the resonance frequency can be detected with higher accuracy.

In the embodiment, the differential signal between the signal from the first detection electrode 61a and the signal from the first counter detection electrode 61b is at least a part of the signal obtained from the first movable portion 11M. The differential signal between the signal from the second detection electrode 62a and the signal from the second counter detection electrode 62b is at least a part of the signal obtained from the second movable portion 12M.

As shown in FIG. 1, for example, the controller 70 may include a processor 77. The processor 77 is configured to output a signal according to a difference between the resonance frequency of the first beam 11 and the resonance frequency of the second beam 12 based on the output signal of the first differential circuit 71 and the output signal of the second differential circuit 72. As described above, the AC signal is supplied from the first drive circuit 76 to the first drive electrode 51 and the second drive electrode 52. The processor 77 may perform processing synchronized with the AC signal. For example, the processor 77 may perform synchronous detection processing. For example, the processor 77 may perform filter processing. For example, C/V (Capacitance / Voltage) conversion processing may be performed in the processor 77. The C/V conversion process may be performed, for example, in at least one of the first differential circuit 71 or the second differential circuit 72. For example, an AD conversion processing may be performed in the processor 77. For example, the processor 77 may perform a PLL (Phase Locked Loop) processing. For example, a DA conversion processing may be performed in the processor 77. For example, the processor 77 may perform an FFT (Fast Fourier Transform) processing.

As shown in FIG. 1, the first detection element 10U includes a second other detection electrode 62c and a second other counter detection electrode 62d. The second other detection electrode 62c is fixed to the base body 50S. The second other counter detection electrode 62d is fixed to the base body 50S (see FIG. 3C). As shown in FIG. 1, the second extending other portion 22f is located between the second other detection electrode 62c and the second other counter detection electrode 62d in the third direction D3.

The second differential circuit 72 is configured to output a signal according to the difference between a capacitance between the second other detection electrode 62c and the second extending other portion 22f, and a capacitance between the second other counter detection electrode 62d and the second extending other portion 22f.

A position of the second other detection electrode 62c in the third direction D3 is between a position of the second beam other end portion 12f in the third direction D3 and a position of the second other counter detection electrode 62d in the third direction D3.

A position of the second detection electrode 62a in the third direction D3 is between a position of the second beam end portion 12e in the third direction D3 and a position of the second counter detection electrode 62b in the third direction D3.

As shown in FIGS. 2A and 2B, a structure body 59 may be provided around the first movable member 10 in the X-Y plane. At least a part of the structure body 59 may function as a stopper for the first movable member 10.

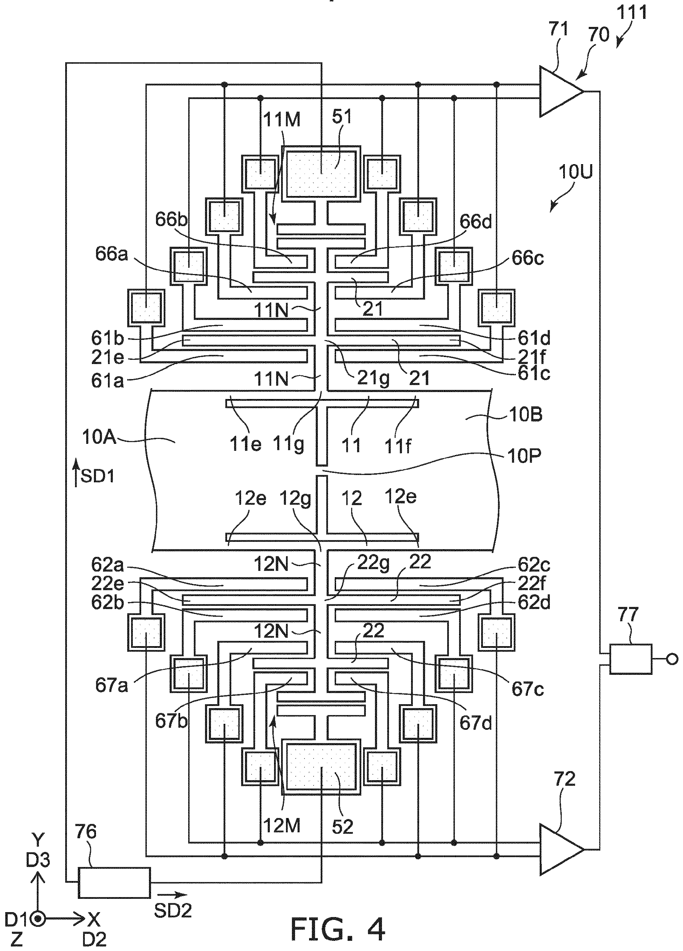

FIG. 4 is a schematic plan view illustrating the sensor according to the first embodiment.

As shown in FIG. 4, in a sensor 111 according to the embodiment, the first detection element 10U and the controller 70 are also provided. In the sensor 111, the first movable portion 11M provided in the first detection element 10U includes a plurality of first conductive extending portions 21 and a plurality of first connecting portions 11N. One of the plurality of first connecting portions 11N connects one of the plurality of first conductive extending portions 21 and another one of the plurality of first conductive extending portions 21.

The first detection element 10U includes a plurality of first detection electrodes (the first detection electrode 61a and a detection electrode 66a) and a plurality of first counter detection electrodes (the first counter detection electrode 61b and a detection electrode 66b). A part of one of the plurality of first conductive extending portions 21 is between one of the plurality of first detection electrodes (for example, the detection electrode 66a) and one of the plurality of first counter detection electrodes (for example, the detection electrode 66b) in the third direction D3.

The first detection element 10U may include a plurality of first other detection electrodes (the first other detection electrode 61c and a detection electrode 66c) and a plurality of first other counter detection electrodes (the first other counter detection electrode 61d and a detection electrode 66d). Another part of the plurality of first conductive extending portions 21 is between one of the plurality of first other detection electrodes (for example, the detection electrode 66c) and one of the plurality of first other counter detection electrodes (for example, the detection electrode 66d) in the third direction D3.

One of the plurality of first conductive extending portions 21 is between the first beam 11 and an other one of the plurality of first conductive extending portions 21 in the third direction D3. A length of the one of the plurality of first conductive extending portions 21 in the second direction D2 is longer than a length of the other one of the plurality of first conductive extending portions 21 in the second direction D2. A length (the length along the second direction D2) of the first conductive extending portion 21 near the first beam 11 is longer than a length (the length along the second direction D2) of the first conductive extending portion 21 far from the first beam 11. For example, when the first movable portion 11M is displaced so as to rotate, it becomes difficult to come into contact with other members.

As shown in FIG. 4, in the sensor 111, the second movable portion 12M provided in the first detection element 10U may include a plurality of second conductive extending portions 22 and a plurality of second connecting portions 12N. One of the plurality of second connecting portions 12N connects one of the plurality of second conductive extending portions 22 and an other one of the plurality of second conductive extending portions 22.

The first detection element 10U may include a plurality of second detection electrodes (the second detection electrode 62a and a detection electrode 67a), and a plurality of second counter detection electrodes (the second counter detection electrode 62b and a detection electrode 67b). A part of one of the plurality of second conductive extending portions 22 is between one of the plurality of second detection electrodes (for example, the detection electrode 67a) and one of the plurality of second counter detection electrodes (for example, the detection electrode 67b) in the third direction D3.

The first detection element 10U may include a plurality of second other detection electrodes (the second other detection electrode 62c and a detection electrode 67c) and a plurality of second other counter detection electrodes (the second other counter detection electrode 62d and a detection electrode 67d). An other part of one of the plurality of second conductive extending portions 22 is between one of the plurality of second other detection electrodes (for example, the detection electrode 67c) and one of the plurality of second other counter detection electrodes (for example, the detection electrode 67d) in the third direction D3.

One of the plurality of second conductive extending portions 22 is between the second beam 12 and an other one of the plurality of second conductive extending portions 22 in the third direction D3. A length of the one the plurality of second conductive extending portions 22 in the second direction D2 is longer than a length of the other one of the plurality of second conductive extending portions 22 in second direction D2. A length (the length along the second direction D2) of the second conductive extending portion 22 near the second beam 12 is longer than a length (the length along the second direction D2) of the second conductive extending portion 22 far from the second beam 12. For example, when the second movable portion 12M is displaced so as to rotate, it becomes difficult to come into contact with other members.

In the embodiment, the number of the plurality of first conductive extending portions 21 and the number of the plurality of second conductive extending portions 22 are arbitrary.

The sensor (the sensor 110 or 111) according to the embodiment can be applied to, for example, a DRA (Differential Resonant Accelerometer). In one example of the embodiment, a plurality of extending conductive portions are provided. As a result, a "Tree type electrode" is formed. The plurality of extending conductive portions are connected to the plurality of movable beams (two resonant beams). As a result, high capacitance sensitivity can be obtained. For example, it is easy to reduce the phase noise of the PLL circuit. For example, high accuracy (for example, low drift) becomes easy. In the two resonant beams, the temperature coefficient of the resonant frequency remains substantially the same. For example, differential processing provides high temperature stability.

### Second embodiment

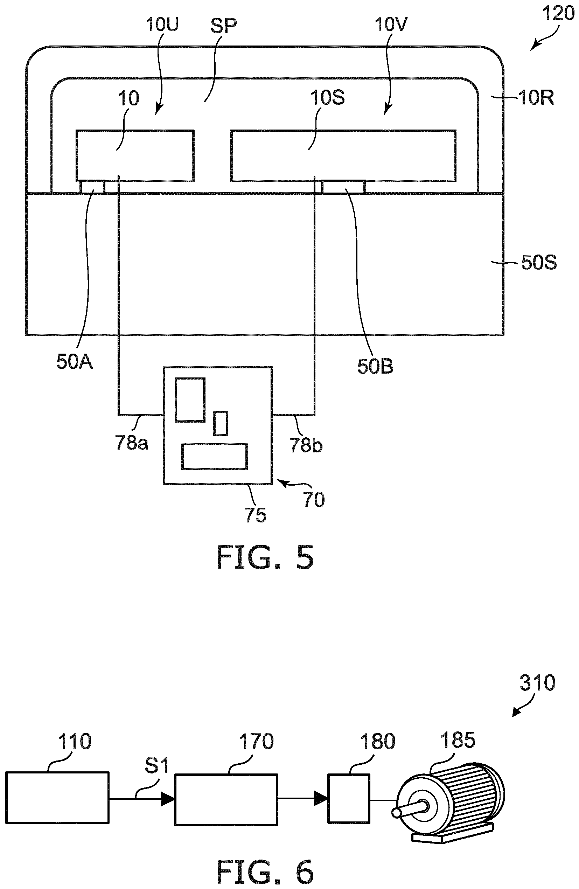

FIG. 5 is a schematic cross-sectional view illustrating a sensor according to a second embodiment.

As shown in FIG. 5, a sensor 120 according to the embodiment includes a second detection element 10V in addition to the first detection element 10U described with respect to the first embodiment. The second detection element 10V includes, for example, a second support portion 50B and a second movable member 10S. The second support portion 50B is fixed to the base body 50S. The second movable member 10S is supported by the second support portion 50B and is separated from the base body 50S. The sensor 120 can detect the angle of the sensor 120 by a signal corresponding to the movement of the second movable member 10S. For example, at least a part of the second movable member 10S is vibrated. The angle can be detected by detecting the vibration state that changes according to the change in the angle. For example, angle detection is performed based on the Foucault pendulum principle. The second movable member 10S is, for example, an angle direct detection type gyro (RIG: Rate Integrating Gyroscope). The sensor 120 is, for example, an inertial measurement unit (IMU).

In the sensor 120, the configuration described with respect to the first embodiment can be applied to the configurations of the base body 50S, the first support portion 50A, the first movable member 10, and the like.

As shown in FIG. 5, a lid portion 10R may be provided in the sensor 120. The lid portion 10R is connected to the base body 50S. The first support portion 50A, the first movable member 10, the second support portion 50B, and the second movable member 10S are provided between the base body 50S and the lid portion 10R. For example, a space SP surrounded by the base body 50S and the lid portion 10R is less than 1 atm. By reducing the pressure in the space SP, more accurate detection can be performed. The space SP is, for example, 0.1 Pa or less.

As shown in FIG. 5, an electric signal obtained from the first movable member 10 and an electric signal obtained from the second movable member 10S may be supplied to the processing circuit 75. For example, the first movable member 10 and the processing circuit 75 are electrically connected by the wiring 78a. The second movable member 10S and the processing circuit 75 are electrically connected by the wiring 78b. The processing circuit 75 is, for example, a PLL circuit. The processing circuit 75 is included in the controller 70, for example. The processing circuit 75 can detect a change in the resonance frequency obtained from the first movable member 10. Thereby, for example, acceleration and temperature can be detected. The processing circuit 75 can detect a change in the resonance frequency obtained from the second movable member 10S. Thereby, for example, the angle can be detected. Angular velocity may be detected. A small sensor can be obtained.

### Third embodiment

The third embodiment relates to an electronic device.

FIG. 6 is a schematic diagram illustrating the electronic device according to the third embodiment.

As shown in FIG. 6, an electronic device 310 according to the third embodiment includes the sensor according to the first embodiment or the second embodiment, and the circuit processing portion 170. In the example of FIG. 6, the sensor 110 is illustrated as the sensor. The circuit processing portion 170 can control a circuit 180 based on a signal S1 obtained from the sensor. The circuit 180 is, for example, a control circuit of a drive device 185. According to the embodiment, the circuit 180 for controlling the drive device 185 can be controlled with high accuracy based on the detection result with high accuracy.

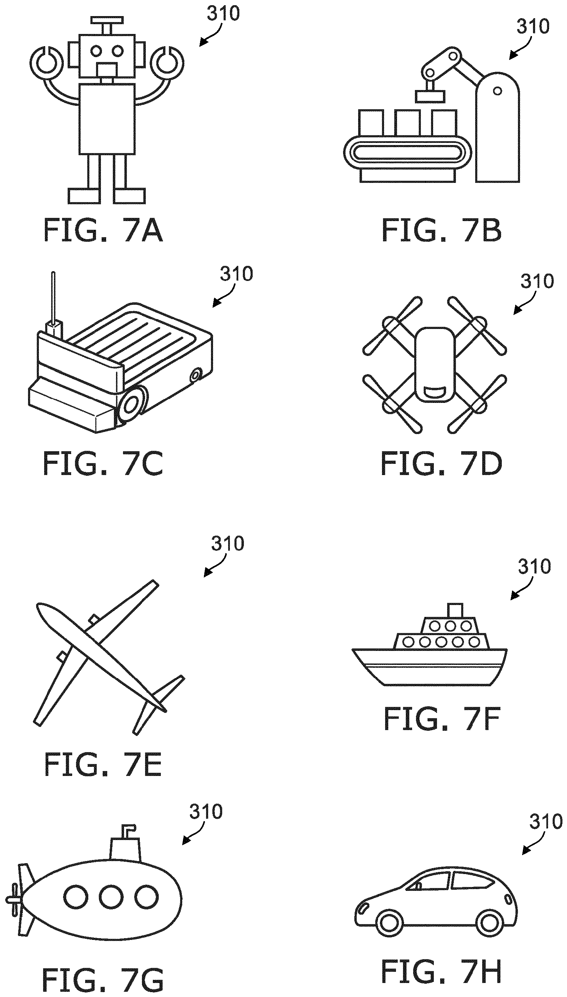

FIGS. 7A to 7H are schematic views illustrating the application of the electronic device.

As shown in FIG. 7A, the electronic device 310 may be at least a part of the robot. As shown in FIG. 7B, the electronic device 310 may be at least a part of a work robot provided in a manufacturing factory or the like. As shown in FIG. 7C, the electronic device 310 may be at least a part of an automatic guided vehicle such as in a factory. As shown in FIG. 7D, the electronic device 310 may be at least a part of a drone (unmanned aerial vehicle). As shown in FIG. 7E, the electronic device 310 may be at least a part of an airplane. As shown in FIG. 7F, the electronic device 310 may be at least a part of the ship. As shown in FIG. 7G, the electronic device 310 may be at least a part of the submarine. As shown in FIG. 7H, the electronic device 310 may be at least a part of an automobile. The electronic device 310 according to the third embodiment may include, for example, at least one of a robot and a movable body.

### Fourth embodiment

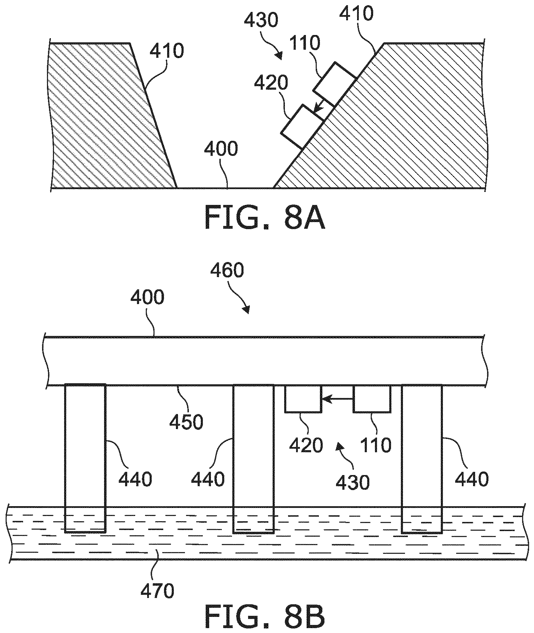

FIGS. 8A and 8B are schematic views illustrating a sensor according to a fourth embodiment.

As shown in FIG. 8A, a sensor 430 according to the embodiment includes the above-mentioned sensor according to the embodiment and the transmitting / receiving portion 420. In the example of FIG. 8A, the sensor 110 is illustrated as the sensor. The transmitting / receiving portion 420 can transmit a signal obtained from the sensor 110 by, for example, at least one of wireless and wired methods. The sensor 430 is provided, for example, on a slope surface 410 such as a road 400. The sensor 430 is configured to monitor a state of, for example, a facility (e.g., infrastructure). The sensor 430 may be, for example, a state monitoring device.

For example, the sensor 430 detects a change in the state of the slope surface 410 of the road 400 with high accuracy. The change in the state of the slope surface 410 includes, for example, at least one of a change in the tilt angle and a change in the vibration state. The signal (inspection result) obtained from the sensor 110 is transmitted by the transmitting / receiving portion 420. The status of a facility (e.g., infrastructure) can be monitored, for example, continuously.

As shown in FIG. 8B, the sensor 430 is provided, for example, at a part of a bridge 460. The bridge 460 is installed on the river 470. For example, the bridge 460 includes at least one of the main girder 450 and the pier 440. The sensor 430 is provided on at least one of the main girder 450 or the pier 440. For example, at least one of the angles of the main girder 450 or the pier 440 may change due to deterioration or the like. For example, the vibration state may change in at least one of the main girder 450 or the pier 440. The sensor 430 detects these changes with high accuracy. The detection result can be transmitted to any place by the transmitting / receiving portion 420. Abnormalities can be detected effectively.

According to the embodiment, it is possible to provide a sensor and an electronic device capable of improving the characteristics.

Hereinabove, exemplary embodiments of the invention are described with reference to specific examples. However, the embodiments of the invention are not limited to these specific examples. For example, one skilled in the art may similarly practice the invention by appropriately selecting specific configurations of components included in sensors such as base bodies, support portions, movable portions, controllers, etc., from known art. Such practice is included in the scope of the invention which is defined by the appended claims.

Further, any two or more components of the specific examples may be combined within the extent of technical feasibility and are included in the scope of the invention which is defined by the appended claims.

Moreover, all sensors and electronic devices practicable by an appropriate design modification by one skilled in the art based on the sensors and the electronic devices described above as embodiments of the invention also are within the scope of the invention which is defined by the appended claims.

Various other variations and modifications can be conceived by those skilled in the art within the scope of the invention, and it is understood that such variations and modifications are also encompassed within the scope of the invention, which is defined by the appended claims.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the invention which is defined by the appended claims.

## Claims

1. A sensor (110), comprising:
a first detection element (10U); and
a controller (70),
the first detection element including,
a base body (50S),
a first support portion (50A) fixed to the base body,
a first movable member (10) supported by the first support portion, a first gap (10Z) being provided between the base body and the first movable member,
a first detection electrode (61a) fixed to the base body, and
a first counter detection electrode (61b) fixed to the base body,
the first movable member including a first movable portion (11M), the first movable portion including a first beam (11), a first conductive extending portion (21), and a first connecting portion (11N), the first beam including a first beam end portion (11e), a first beam other end portion (11f), and a first beam intermediate portion (11g) provided between the first beam end portion and the first beam other end portion, a second direction (D2) from the first beam end portion to the first beam other end portion crossing a first direction (D1) from the base body to the first support portion,
the first conductive extending portion including a first extending portion (21e), a first extending other portion (21f), and a first extending intermediate portion (21g) provided between the first extending portion and the first extending other portion, a direction from the first extending portion to the first extending other portion being along the second direction,
the first connecting portion connecting the first extending intermediate portion with the first beam intermediate portion,
**characterised in that**
the first extending portion is between the first detection electrode and the first counter detection electrode in a third direction (D3), the third direction crossing a plane including the first direction and the second direction, **in that**
the controller includes a first differential circuit (71), and **in that**
the first differential circuit is configured to output a signal according to a difference between a capacitance between the first detection electrode and the first extending portion, and a capacitance between the first counter detection electrode and the first extending portion.

2. The sensor according to claim 1, wherein
the first detection element includes a first drive electrode (51) fixed to the base body, and
the first drive electrode faces the first extending intermediate portion.

3. The sensor according to claim 2, wherein the first extending intermediate portion is located between the first beam and the first driving electrode in the third direction.

4. The sensor according to claim 2 or 3, wherein
the controller includes a first drive circuit (76),
the first drive circuit is configured to supply a first drive signal (SD1) to the first drive electrode, and
the first beam is configured to vibrate in response to the first drive signal.

5. The sensor according to claim 4, wherein
the first detection element further includes
a first other detection electrode (61c) fixed to base body, and
a first other counter detection electrode (61d) fixed to the base body,
the first extending other portion is located between the first other detection electrode and the first other counter detection electrode in the third direction, and
the first differential circuit is configured to output a signal according to a difference between a capacitance between the first other detection electrode and the first extending other portion, and a capacitance between the first other counter detection electrode and the first extending other portion.

6. The sensor according to claim 5, wherein
the first other detection electrode is electrically connected to the first detection electrode, and
the first other counter detection electrode is electrically connected to the first counter detection electrode.

7. The sensor according to claim 5 or 6, wherein
a position of the first other detection electrode in the third direction is between a position of the first beam other end portion in the third direction and a position of the first other counter detection electrode in the third direction.

8. The sensor according to any one of claims 5-7, wherein
a position of the first detection electrode in the third direction is between a position of the first beam end portion in the third direction and a position of the first counter detection electrode in the third direction.

9. The sensor according to any one of claims 4-8, wherein
the first movable member includes
a first movable base portion (10A) supported by the first support portion,
a connection base portion (10P) supported by the first movable base portion, and
a second movable base portion (10B) supported by the connection base portion,
a direction from the first movable base portion to the second movable base portion is along the second direction,
the first beam end portion is connected to the first movable base portion, and
the first beam other end portion is connected to the second movable base portion.

10. The sensor according to claim 9, wherein
the first movable member includes a movable weight portion (10X) supported by the second movable base portion, and
the second movable base portion is located between the first movable base portion and the movable weight portion in the second direction.

11. The sensor according to claim 9 or 10, wherein
the first movable member includes a second movable portion (12M),
the second movable portion includes a second beam (12), a second conductive extending portion (22), and a second connecting portion (12N),
the second beam includes a second beam end portion (12e), a second beam other end portion (12f), and a second beam intermediate portion (12g) provided between the second beam end portion and the second beam other end portion, a direction from the second beam end portion to the second beam other end portion is along the second direction,
the second conductive extending portion includes a second extending portion (22e), the second extending other portion, and a second extending intermediate portion (22g) provided between the second extending portion and the second extending other portion, a direction from the second extending portion to the second extending other portion is along the second direction,
the second connecting portion connects the second extending intermediate portion to the second beam intermediate portion,
the second extending portion is located between the second detection electrode and the second counter detection electrode in the third direction,
the second beam end portion is connected to the first movable base portion,
the second beam other end portion is connected to the second movable base portion,
the connection base portion is located between the second beam and the first beam in the third direction,
the controller includes a second differential circuit (72), and
the second differential circuit is configured to output a signal according to a difference between a capacitance between the second detection electrode and the second extending portion, and a capacitance between the second counter detection electrode and the second extending portion.

12. The sensor according to claim 11, wherein
the first detection element includes a second drive electrode (52) fixed to the base portion, and
the second drive electrode faces the second extending intermediate portion.

13. The sensor according to claim 12, wherein
the first drive circuit is configured to supply a second drive signal (SD2) to the second drive electrode, and
the second beam is configured to vibrate in response to the second drive signal.

14. The sensor according to claim 11, wherein
the controller includes a processor (77), and
the processor is configured to output a signal according to a difference between a resonance frequency of the first beam and a resonance frequency of the second beam based on an output signal of the first differential circuit and an output signal of the second differential circuit.

15. An electronic device (310), comprising,
the sensor according to any one of claims 1-14, and
a circuit processing portion (170) configured to control a circuit based on a signal (S1) obtained from the sensor.

## Patentansprüche

1. Sensor (110), Folgendes umfassend:
ein erstes Ermittlungselement (10U); und
eine Steuerungseinrichtung (70),
wobei das erste Ermittlungselement Folgendes einschließt:
einen Basiskörper (50S),
einen ersten Stützabschnitt (50A), der am Basiskörper befestigt ist,
ein erstes bewegbares Element (10), das durch den ersten Stützabschnitt gestützt wird, wobei ein erster Spalt (10Z) zwischen dem Basiskörper und dem ersten bewegbaren Element bereitgestellt wird,
eine erste Ermittlungselektrode (61a), die am Basiskörper befestigt ist, und
eine erste Gegenermittlungselektrode (61b), die am Basiskörper befestigt ist,
wobei das erste bewegbare Element einen ersten bewegbaren Abschnitt (11M) einschließt, wobei der erste bewegbare Abschnitt einen ersten Träger (11), einen ersten leitfähigen Verlängerungsabschnitt (21) und einen ersten Verbindungsabschnitt (11N) einschließt, wobei der erste Träger einen Endabschnitt des ersten Trägers (11e), einen anderen Endabschnitt des ersten Trägers (11f) und einen Zwischenabschnitt des ersten Trägers (11g), der zwischen dem Endabschnitt des ersten Trägers und dem anderen Endabschnitt des ersten Trägers bereitgestellt ist, einschließt, wobei eine zweite Richtung (D2) vom Endabschnitt des ersten Trägers zum anderen Endabschnitt des ersten Trägers eine erste Richtung (D1) vom Basiskörper zum ersten Stützabschnitt kreuzt,
wobei der erste leitfähige Verlängerungsabschnitt einen ersten Verlängerungsabschnitt (21e), einen ersten anderen Verlängerungsabschnitt (21f) und einen ersten Zwischen-Verlängerungsabschnitt (21g), der zwischen dem ersten Verlängerungsabschnitt und dem ersten anderen Verlängerungsabschnitt bereitgestellt ist, einschließt, wobei eine Richtung vom ersten Verlängerungsabschnitt zum ersten anderen Verlängerungsabschnitt entlang der zweiten Richtung verläuft,
wobei der erste Verbindungsabschnitt den ersten Zwischen-Verlängerungsabschnitt mit dem Zwischenabschnitt des ersten Trägers verbindet,
**dadurch gekennzeichnet, dass**
der erste Verlängerungsabschnitt zwischen der ersten Ermittlungselektrode und der ersten Gegenermittlungselektrode in einer dritten Richtung (D3) liegt, wobei die dritte Richtung eine Ebene kreuzt, welche die erste Richtung und die zweite Richtung einschließt,
dass
die Steuerungseinrichtung eine erste Differenzschaltung (71) einschließt,
und dass
die erste Differenzschaltung dafür konfiguriert ist, ein Signal gemäß einer Differenz zwischen einer Kapazität zwischen der ersten Ermittlungselektrode und dem ersten Verlängerungsabschnitt und einer Kapazität zwischen der ersten Gegenermittlungselektrode und dem ersten Verlängerungsabschnitt auszugeben.

2. Sensor nach Anspruch 1, wobei
das erste Ermittlungselement eine erste Antriebselektrode (51) einschließt, die am Basiskörper befestigt ist, und
die erste Antriebselektrode dem ersten Zwischen-Verlängerungsabschnitt zugewandt ist.

3. Sensor nach Anspruch 2, wobei der erste Zwischen-Verlängerungsabschnitt in der dritten Richtung zwischen dem ersten Träger und der ersten Antriebselektrode angeordnet ist.

4. Sensor nach Anspruch 2 oder 3, wobei
die Steuerungseinrichtung eine erste Antriebsschaltung (76) einschließt,
die erste Antriebsschaltung dafür konfiguriert ist, der ersten Antriebselektrode ein erstes Antriebssignal (SD1) zuzuführen, und
der erste Träger dafür konfiguriert ist, als Antwort auf das erste Antriebssignal zu vibrieren.

5. Sensor nach Anspruch 4, wobei
das erste Ermittlungselement ferner Folgendes einschließt:
eine erste andere Ermittlungselektrode (61c), die am Basiskörper befestigt ist, und
eine erste andere Gegenermittlungselektrode (61d), die am Basiskörper befestigt ist,
wobei der erste andere Verlängerungsabschnitt in der dritten Richtung zwischen der ersten anderen Ermittlungselektrode und der ersten anderen Gegenermittlungselektrode angeordnet ist, und
wobei die erste Differenzschaltung dafür konfiguriert ist, ein Signal gemäß einer Differenz zwischen einer Kapazität zwischen der ersten anderen Ermittlungselektrode und dem ersten anderen Verlängerungsabschnitt und einer Kapazität zwischen der ersten anderen Gegenermittlungselektrode und dem ersten anderen Verlängerungsabschnitt auszugeben.

6. Sensor nach Anspruch 5, wobei
die erste andere Ermittlungselektrode elektrisch mit der ersten Ermittlungselektrode verbunden ist, und
die erste andere Gegenermittlungselektrode elektrisch mit der ersten Gegenermittlungselektrode verbunden ist.

7. Sensor nach Anspruch 5 oder 6, wobei
eine Position der ersten anderen Ermittlungselektrode in der dritten Richtung zwischen einer Position des anderen Endabschnitts des ersten Trägers in der dritten Richtung und einer Position der ersten anderen Gegenermittlungselektrode in der dritten Richtung liegt.

8. Sensor nach einem der Ansprüche 5 bis 7, wobei
eine Position der ersten Ermittlungselektrode in der dritten Richtung zwischen einer Position des Endabschnitts des ersten Trägers in der dritten Richtung und einer Position der ersten Gegenermittlungselektrode in der dritten Richtung liegt.

9. Sensor nach einem der Ansprüche 4 bis 8, wobei
das erste bewegbare Element Folgendes einschließt:
einen ersten bewegbaren Basisabschnitt (10A), der durch den ersten Stützabschnitt gestützt wird,
einen Verbindungsbasisabschnitt (10P), der durch den ersten bewegbaren Basisabschnitt gestützt wird, und
einen zweiten bewegbaren Basisabschnitt (10B), der durch den Verbindungsbasisabschnitt gestützt wird,
eine Richtung vom ersten bewegbaren Basisabschnitt zum zweiten bewegbaren Basisabschnitt entlang der zweiten Richtung verläuft,
der Endabschnitt des ersten Trägers mit dem ersten bewegbaren Basisabschnitt verbunden ist, und
der andere Endabschnitt des ersten Trägers mit dem zweiten bewegbaren Basisabschnitt verbunden ist.

10. Sensor nach Anspruch 9, wobei
das erste bewegbare Element einen bewegbaren Gewichtsabschnitt (10X) einschließt, der durch den zweiten bewegbaren Basisabschnitt gestützt wird, und
der zweite bewegbare Basisabschnitt in der zweiten Richtung zwischen dem ersten bewegbaren Basisabschnitt und dem bewegbaren Gewichtsabschnitt angeordnet ist.

11. Sensor nach Anspruch 9 oder 10, wobei
das erste bewegbare Element einen zweiten bewegbaren Abschnitt (12M) einschließt,
der zweite bewegbare Abschnitt einen zweiten Träger (12), einen zweiten leitfähigen Verlängerungsabschnitt (22) und einen zweiten Verbindungsabschnitt (12N) einschließt,
der zweite Träger einen Endabschnitt des zweiten Trägers (12e), einen anderen Endabschnitt des zweiten Trägers (12f) und einen Zwischenabschnitt des zweiten Trägers (12g) einschließt, der zwischen dem Endabschnitt des zweiten Trägers und dem anderen Endabschnitt des zweiten Trägers bereitgestellt ist, wobei eine Richtung vom Endabschnitt des zweiten Trägers zum anderen Endabschnitt des zweiten Trägers entlang der zweiten Richtung verläuft,
der zweite leitfähige Verlängerungsabschnitt einen zweiten Verlängerungsabschnitt (22e), den zweiten anderen Verlängerungsabschnitt und einen zweiten Zwischen-Verlängerungsabschnitt (22g), der zwischen dem zweiten Verlängerungsabschnitt und dem zweiten anderen Verlängerungsabschnitt bereitgestellt ist, einschließt, wobei eine Richtung vom zweiten Verlängerungsabschnitt zum zweiten anderen Verlängerungsabschnitt entlang der zweiten Richtung verläuft,
der zweite Verbindungsabschnitt den zweiten Zwischen-Verlängerungsabschnitt mit dem Zwischenabschnitt des zweiten Trägers verbindet,
der zweite Verlängerungsabschnitt in der dritten Richtung zwischen der zweiten Ermittlungselektrode und der zweiten Gegenermittlungselektrode angeordnet ist,
der Endabschnitt des zweiten Trägers mit dem ersten bewegbaren Basisabschnitt verbunden ist,
der andere Endabschnitt des zweiten Trägers mit dem zweiten bewegbaren Basisabschnitt verbunden ist,
der Verbindungsbasisabschnitt in der dritten Richtung zwischen dem zweiten Träger und dem ersten Träger angeordnet ist,
die Steuerungseinrichtung eine zweite Differenzschaltung (72) einschließt, und
die zweite Differenzschaltung dafür konfiguriert ist, ein Signal gemäß einer Differenz zwischen einer Kapazität zwischen der zweiten Ermittlungselektrode und dem zweiten Verlängerungsabschnitt und einer Kapazität zwischen der zweiten Gegenermittlungselektrode und dem zweiten Verlängerungsabschnitt auszugeben.

12. Sensor nach Anspruch 11, wobei
das erste Ermittlungselement eine zweite Antriebselektrode (52) einschließt, die am Basisabschnitt befestigt ist, und
die zweite Antriebselektrode dem zweiten Zwischen-Verlängerungsabschnitt zugewandt ist.

13. Sensor nach Anspruch 12, wobei
die erste Antriebsschaltung dafür konfiguriert ist, der zweiten Antriebselektrode ein zweites Antriebssignal (SD2) zuzuführen, und
der zweite Träger dafür konfiguriert ist, als Antwort auf das zweite Antriebssignal zu vibrieren.

14. Sensor nach Anspruch 11, wobei
die Steuerungseinrichtung einen Prozessor (77) einschließt, und
der Prozessor dafür konfiguriert ist, auf der Grundlage eines Ausgangssignals der ersten Differenzschaltung und eines Ausgangssignals der zweiten Differenzschaltung ein Signal gemäß einer Differenz zwischen einer Resonanzfrequenz des ersten Trägers und einer Resonanzfrequenz des zweiten Trägers auszugeben.

15. Elektronische Vorrichtung (310), Folgendes umfassend:
den Sensor nach einem der Ansprüche 1 bis 14, und
einen Schaltungsverarbeitungsabschnitt (170), der dafür konfiguriert ist, eine Schaltung auf der Grundlage eines vom Sensor erlangten Signals (S1) zu steuern.

## Revendications

1. Capteur (110), comprenant :
un premier élément de détection (10U) ; et
un dispositif de commande (70),
le premier élément de détection incluant
un corps de base (50S),
une première partie de support (50A) fixée au corps de base,
un premier élément mobile (10) supporté par la première partie de support, un premier espace (10Z) étant ménagé entre le corps de base et le premier élément mobile,
une première électrode de détection (61a) fixée au corps de base, et
une première contre-électrode de détection (61b) fixée au corps de base,
le premier élément mobile incluant une première partie mobile (11M), la première partie mobile incluant une première poutre (11), une première partie d'extension conductrice (21) et une première partie de connexion (11N), la première poutre incluant une partie d'extrémité de première poutre (11e), une autre partie d'extrémité de première poutre (11f) et une partie intermédiaire de première poutre (11g) ménagée entre la partie d'extrémité de première poutre et l'autre partie d'extrémité de première poutre, une deuxième direction (D2) depuis la partie d'extrémité de première poutre jusqu'à l'autre partie d'extrémité de première poutre croisant une première direction (D1) depuis le corps de base jusqu'à la première partie de support,
la première partie d'extension conductrice incluant une première partie d'extension (21e), une première autre partie d'extension (21f) et une première partie intermédiaire d'extension (21g) ménagée entre la première partie d'extension et la première autre partie d'extension, une direction depuis la première partie d'extension jusqu'à la première autre partie d'extension étant suivant la deuxième direction,
la première partie de connexion connectant la première partie intermédiaire d'extension avec la partie intermédiaire de première poutre,
**caractérisé en ce que**
la première partie d'extension est entre la première électrode de détection et la première contre-électrode de détection dans une troisième direction (D3), la troisième direction croisant un plan incluant la première direction et la deuxième direction,
**en ce que**
le dispositif de commande inclut un premier circuit différentiel (71),
et **en ce que**
le premier circuit différentiel est configuré pour émettre en sortie un signal conformément à une différence entre une capacité entre la première électrode de détection et la première partie d'extension et une capacité entre la première contre-électrode de détection et la première partie d'extension.

2. Capteur selon la revendication 1, dans lequel
le premier élément de détection inclut une première électrode de pilotage (51) fixée au corps de base, et
la première électrode de pilotage fait face à la première partie intermédiaire d'extension.

3. Capteur selon la revendication 2, dans lequel la première partie intermédiaire d'extension est située entre la première poutre et la première électrode de pilotage dans la troisième direction.

4. Capteur selon la revendication 2 ou 3, dans lequel
le dispositif de commande inclut un premier circuit de pilotage (76),
le premier circuit de pilotage est configuré pour fournir, à la première électrode de pilotage, un premier signal de pilotage (SD1), et
la première poutre est configurée pour vibrer en réponse au premier signal de pilotage.

5. Capteur selon la revendication 4, dans lequel
le premier élément de détection inclut en outre
une première autre électrode de détection (61c) fixée au corps de base, et
une première autre contre-électrode de détection (61d) fixée au corps de base,
la première autre partie d'extension est située entre la première autre électrode de détection et la première autre contre-électrode de détection dans la troisième direction, et
le premier circuit différentiel est configuré pour émettre en sortie un signal conformément à une différence entre une capacité entre la première autre électrode de détection et la première autre partie d'extension et une capacité entre la première autre contre-électrode de détection et la première autre partie d'extension.

6. Capteur selon la revendication 5, dans lequel
la première autre électrode de détection est connectée électriquement à la première électrode de détection, et
la première autre contre-électrode de détection est connectée électriquement à la première contre-électrode de détection.

7. Capteur selon la revendication 5 ou 6, dans lequel
une position de la première autre électrode de détection dans la troisième direction est entre une position de l'autre partie d'extrémité de première poutre dans la troisième direction et une position de la première autre contre-électrode de détection dans la troisième direction.

8. Capteur selon l'une quelconque des revendications 5 à 7, dans lequel
une position de la première électrode de détection dans la troisième direction est entre une position de la partie d'extrémité de première poutre dans la troisième direction et une position de la première contre-électrode de détection dans la troisième direction.

9. Capteur selon l'une quelconque des revendications 4 à 8, dans lequel
le premier élément mobile inclut
une première partie de base mobile (10A) supportée par la première partie de support,
une partie de base de connexion (10P) supportée par la première partie de base mobile, et
une seconde partie de base mobile (10B) supportée par la partie de base de connexion,
une direction depuis la première partie de base mobile jusqu'à la seconde partie de base mobile est suivant la deuxième direction,
la partie d'extrémité de première poutre est connectée à la première partie de base mobile, et
l'autre partie d'extrémité de première poutre est connectée à la seconde partie de base mobile.

10. Capteur selon la revendication 9, dans lequel
le premier élément mobile inclut une partie de poids mobile (10X) supportée par la seconde partie de base mobile, et
la seconde partie de base mobile est située entre la première partie de base mobile et la partie de poids mobile dans la deuxième direction.

11. Capteur selon la revendication 9 ou 10, dans lequel
le premier élément mobile inclut une seconde partie mobile (12M),
la seconde partie mobile inclut une seconde poutre (12), une seconde partie d'extension conductrice (22) et une seconde partie de connexion (12N),
la seconde poutre inclut une partie d'extrémité de seconde poutre (12e), une autre partie d'extrémité de seconde poutre (12f) et une partie intermédiaire de seconde poutre (12g) ménagée entre la partie d'extrémité de seconde poutre et l'autre partie d'extrémité de seconde poutre, une direction depuis la partie d'extrémité de seconde poutre jusqu'à l'autre partie d'extrémité de seconde poutre est suivant la deuxième direction,
la seconde partie d'extension conductrice inclut une seconde partie d'extension (22e), la seconde autre partie d'extension et une seconde partie intermédiaire d'extension (22g) ménagée entre la seconde partie d'extension et la seconde autre partie d'extension, une direction depuis la seconde partie d'extension jusqu'à la seconde autre partie d'extension est suivant la deuxième direction,
la seconde partie de connexion connecte la seconde partie intermédiaire d'extension à la partie intermédiaire de seconde poutre,
la seconde partie d'extension est située entre la seconde électrode de détection et la seconde contre-électrode de détection dans la troisième direction,
la partie d'extrémité de seconde poutre est connectée à la première partie de base mobile,
l'autre partie d'extrémité de seconde poutre est connectée à la seconde partie de base mobile,
la partie de base de connexion est située entre la seconde poutre et la première poutre dans la troisième direction,
le dispositif de commande inclut un second circuit différentiel (72), et
le second circuit différentiel est configuré pour émettre en sortie un signal conformément à une différence entre une capacité entre la seconde électrode de détection et la seconde partie d'extension et une capacité entre la seconde contre-électrode de détection et la seconde partie d'extension.

12. Capteur selon la revendication 11, dans lequel
le premier élément de détection inclut une seconde électrode de pilotage (52) fixée à la partie de base, et
la seconde électrode de pilotage fait face à la seconde partie intermédiaire d'extension.

13. Capteur selon la revendication 12, dans lequel
le premier circuit de pilotage est configuré pour fournir, à la seconde électrode de pilotage, un second signal de pilotage (SD2), et
la seconde poutre est configurée pour vibrer en réponse au second signal de pilotage.

14. Capteur selon la revendication 11, dans lequel
le dispositif de commande inclut un processeur (77), et
le processeur est configuré pour émettre en sortie un signal conformément à une différence entre une fréquence de résonance de la première poutre et une fréquence de résonance de la seconde poutre sur la base d'un signal de sortie du premier circuit différentiel et d'un signal de sortie du second circuit différentiel.

15. Dispositif électronique (310), comprenant
le capteur selon l'une quelconque des revendications 1 à 14, et
une partie de traitement de circuit (170) configurée pour commander un circuit sur la base d'un signal (S1) obtenu à partir du capteur.
